(19) **Europäisches Patentamt / European Patent Office / Office européen des brevets**

(11) **EP 2 330 153 B1**

(12) **EUROPEAN PATENT SPECIFICATION**

(45) Date of publication and mention
of the grant of the patent:
**17.07.2013 Bulletin 2013/29**

(51) Int Cl.:
*C08L 23/16* (2006.01)          *C08L 7/00* (2006.01)
*C08L 9/00* (2006.01)          *C08L 9/06* (2006.01)
*B65H 27/00* (2006.01)          *C08K 5/01* (2006.01)
*C08K 5/14* (2006.01)

(21) Application number: **10009085.1**

(22) Date of filing: **01.09.2010**

(54) **Paper feed roller**

Papiertransportrolle

Rouleau d'alimentation de papier

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.12.2009 JP 2009273653**
**01.12.2009 JP 2009273654**

(43) Date of publication of application:
**08.06.2011 Bulletin 2011/23**

(73) Proprietor: **Sumitomo Rubber Industries, Ltd.
Hyogo-ken (JP)**

(72) Inventors:
• **Yasuchika, Ito
Kobe-shi
Hyogo-ken 651-0072 (JP)**
• **Hirokazu, Nishimori
Kobe-shi
Hyogo-ken 651-0072 (JP)**

(74) Representative: **Manitz, Gerhart
Manitz, Finsterwald & Partner GbR
Postfach 31 02 20
80102 München (DE)**

(56) References cited:
**EP-A1- 1 477 523          US-A1- 2004 096 247
US-A1- 2004 260 006**

• **DATABASE WPI Week 200753 Thomson
Scientific, London, GB; AN 2007-537393
XP002629619, & JP 2007 106898 A (SUMITOMO
RUBBER IND LTD) 26 April 2007 (2007-04-26)**
• **DATABASE WPI Week 199638 Thomson
Scientific, London, GB; AN 1996-373747
XP002629620, & JP 8 151489 A (BRIDGESTONE
CORP) 11 June 1996 (1996-06-11)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a paper feed roller to be used for paper feeding in static copying machines and various printers, etc.

[Background Art]

For example, in paper feed mechanisms of electro-static copying machines, laser printers, plain paper facsimile machines, ink-jet printers, and automatic teller machines (ATM), etc., various paper feed rollers are installed. The paper feed roller rotates while being in contact with paper (including a plastic film, etc., the same applies to the following description) to convey the paper by friction. For example, feed rollers, conveyance rollers, platen rollers, and ejection rollers, etc., are available as the paper feed rollers.

As the paper feed rollers, conventionally, rollers made of various rubbers such as natural rubber (NR), urethane rubber, ethylene propylene diene rubber (EPDM), polynorbornene rubber, silicone rubber, and polyethylene chloride rubber are generally used.

However, paper powder produced from paper easily adheres to the outer peripheral surface of the paper feed roller, and when the paper feed roller is repeatedly brought into contact with paper, paper powder is accumulated on the outer peripheral surface and deteriorates the frictional coefficient of the paper feed roller with respect to paper, and may cause a conveyance failure comparatively early.

In particular, when paper with a high ash content is used, the paper powder is easily produced, so that paper powder accumulation and a paper conveyance failure are easily caused.

In order to improve the durability and the anti-heat aging performance, etc., of the paper feed roller, combined use of ethylene-$\alpha$-olefin-based copolymer rubber such as EPM and EPDM and diene-based rubber (for example, refer to Patent Documents 1 to 3, etc.) and combined use of ozone-proof rubber such as EPDM and isoprene rubber as rubber components of the paper feed roller (for example, refer to Patent Document 4, etc.) have been examined.

However, based on the inventor's examination, conventional combined uses of rubber could not form a paper feed roller which hardly caused a paper conveyance failure when it was repeatedly brought into contact with paper.

[Prior Art Document]

Patent Document 1: Japanese Unexamined Patent Publication No. 2007-131806
Patent Document 2: Japanese Unexamined Patent Publication No. 2007-131808
Patent Document 3: Japanese Unexamined Patent Publication No. 2007-054178
Patent Document 4: Japanese Examined Patent Publication No. 3947809

[Summary of the Invention]

An object of the present invention is to provide a paper feed roller which hardly causes deterioration in the frictional coefficient due to paper powder accumulation and an accompanying paper conveyance failure, and can keep excellent paper feeding for a longer period.

According to the inventor's examination, a major component of the paper powder is a filler contained in paper, and adhesion of the paper powder is caused by the effect of organic components (classified in fatty series and aromatic series) contained in paper. Therefore, the inventor examined the combination of rubber components for forming the paper feed roller. Specifically, the inventor examined reduction of paper powder adhesion by reducing adhesion of the organic components to the roller surface by adjusting the solubility parameters ($kcal^{1/2}/cm^{3/2}$) of the surface of the paper feed roller with respect to various organic components of fatty series and aromatic series contained in paper by combining a plurality of rubber components.

As a result, the inventor found that when three kinds of ethylene propylene diene rubber (EPDM), isoprene rubber (IR), and either butadiene rubber (BR) or styrene butadiene rubber (SBR) were used in combination as rubber components and the mass ratio of the three rubber components was set within a predetermined range, as clearly shown by the results of Examples and Comparative examples described later, a paper feed roller which hardly caused deterioration in the frictional coefficient due to paper powder accumulation when the paper feed roller was repeatedly brought into contact with paper and an accompanying conveyance failure, and could keep excellent paper feeding for a longer period could be provided.

Specifically, the present invention provides a paper feed roller made of a rubber composition, and the rubber composition contains carbon black and a cross-linking agent and, as rubber components, ethylenepropylene diene rubber (EPDM), isoprene rubber (IR), and either butadiene rubber (BR) or styrene butadiene rubber (SBR), and the mass ratio $R_1$ of the three rubber components expressed by the equation (1):

$$R_1 = M_{EPDM}/(M_{IR}+M_x) \quad (1)$$

(in the equation, $M_{EPDM}$ represents the parts by mass of EPDM, $M_{IR}$ represents the parts by mass of IR, and $M_x$ represents the parts by mass of BR or SBR)
is not less than 25/75 and not more than 75/25.

In order to provide a paper feed roller which more sufficiently suppresses deterioration in the frictional coefficient when the paper feed roller is repeatedly brought into contact with paper and an accompanying conveyance failure and can keep excellent paper feeding for a longer period, the rubber composition to be used as a material of the paper feed roller of the present invention preferably contains isoprene rubber (IR) and butadiene rubber (BR) or styrene butadiene rubber (SBR) the parts by mass of which satisfy the following equation (2) :

$$M_{IR} > M_x \quad (2)$$

(in the equation, $M_{IR}$ represents the parts by mass of IR, and $M_x$ represents the parts by mass of BR or SBR)

When butadiene rubber (BR) is used, the equations (1) and (2) can be expressed as:

$$R_1 = M_{EPDM}/(M_{IR}+M_{BR}) \quad (1)'$$

$$M_{IR} > M_{BR} \quad (2)'$$

($M_{BR}$ represents the parts by mass of BR)
and when styrene butadiene rubber (SBR) is used, the equations can be expressed as:

$$R_1 = M_{EPDM}/(M_{IR}+M_{SBR}) \quad (1)''$$

$$M_{IR} > M_{SBR} \quad (2)''$$

($M_{SBR}$ represents parts by mass of SBR)

In order to provide a paper feed roller which more sufficiently suppresses deterioration in the frictional coefficient when the paper feed roller is repeatedly brought into contact with paper and an accompanying conveyance failure and can keep excellent paper feeding for a longer period, the rubber composition is preferably cross-linked by a peroxide cross-linking agent.

The present invention can provide a paper feed roller which hardly causes deterioration in the frictional coefficient due to paper powder accumulation and an accompanying conveyance failure, and can keep excellent paper feeding for a longer period.

[BRIEF DESCRIPTION OF THE DRAWINGS]

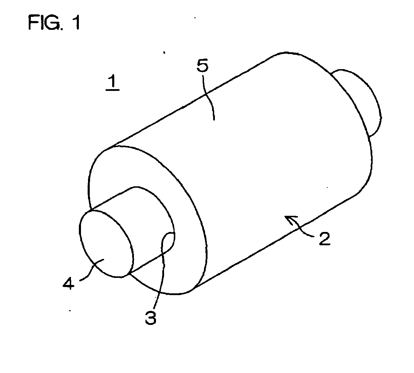

Fig. 1 is a perspective view showing an example of an embodiment of a paper feed roller of the present invention.

[Embodiments of the Invention]

(Configuration example 1 of rubber composition)

A rubber composition to be used as a material of the paper feed roller of the present invention uses carbon black, a cross-linking agent and as rubber components, a combination of three kinds of EPDM, IR, and BR, and the mass ratio $R_1$ of the three kinds of rubber components expressed by the following equation (1)':

$$R_1 = M_{EPDM}/(M_{IR}+M_{BR}) \quad (1)'$$

(in the equation, $M_{EPDM}$ represents the parts by mass of EPDM, $M_{IR}$ represents the parts by mass of IR, and $M_{BR}$ represents the parts by mass of BR)
is set to be not less than 25/75 and not more than 75/25.
Accordingly, a paper feed roller which hardly causes deterioration in the frictional coefficient due to paper powder accumulation when the paper feed roller is repeatedly brought into contact with paper and an accompanying conveyance failure, and can keep excellent paper feeding for a longer period can be provided.
In the present invention, the mass ratio $R_1$ of the three kinds of rubber components is limited to the above-described range for the following reason.
That is, if the mass ratio $R_1$ is less than the above range and EPDM is less, weather resistance of the paper feed roller is deteriorated, and the paper feed roller may be cracked or broken with long-term use. Further, the wear resistance is also deteriorated, so that when the paper feed roller is repeatedly brought into contact with paper, the paper feed roller is easily worn, and this wear deteriorates the frictional coefficient and easily causes a paper conveyance failure.
On the other hand, if the mass ratio $R_1$ is over the above range, IR and BR are relatively less, so that the effect of the combined use of the three kinds of rubber components to make it hard to cause deterioration in the frictional coefficient due to paper powder accumulation caused by repeated contact of the paper feed roller with paper and an accompanying conveyance failure cannot be obtained.
The mass ratio $R_1$ of the three kinds of rubber components is preferably not more than 65/35 in the above range in order to prevent the above-described problems from occurring and keep excellent paper feeding for a long period.
The parts by mass of IR and BR of the three kinds of rubber components preferably satisfy the following equation (2)':

$$M_{IR} > M_{BR} \quad (2)'$$

(in the equation, $M_{IR}$ represents the parts by mass of IR, and $M_{BR}$ represents the parts by mass of BR).
Accordingly, as clearly shown by the results of Examples and Comparative examples described later, a paper feed roller which more sufficiently suppresses deterioration in the frictional coefficient when the paper feed roller is repeatedly brought into contact with paper and an accompanying conveyance failure, and can keep excellent paper feeding for a longer period, can be provided.
The mass ratio $R_2$ of IR and BR expressed by the following equation (3)' :

$$R_2 = M_{IR}/M_{BR} \quad (3)'$$

(in the equation, $M_{IR}$ represents the parts by mass of IR, and $M_{BR}$ represents the parts by mass of BR).
is preferably not more than 3.0.
As EPDM of the three kinds of rubber components, various copolymers obtained by copolymerizing ethylene, propylene, and diene are usable. As diene, ethylidene norbornene (ENB), dicyclopentadiene (DCPD), etc., are used.
As EPDM, either so-called oil-extended EPDM extended with extender oil or non-oil-extended EPDM not extended with extender oil can be used. In order to improve workability when preparing a rubber composition by blending and kneading an additive agent such as a cross-linking agent to the three kinds of rubber components ormolding the rubber composition into a roller shape, oil-extended EPDM is preferably used.
As ENB-based oil-extended EPDM using ENB as diene, for example, one or two or more kinds of Esprene (registered trademark) 670F (rubber component : extender oil = 100 : 100 (mass ratio)) and 671F (rubber component :

extender oil = 100 : 70 (mass ratio)) made by Sumitomo Chemical Co., Ltd., and Mitsui EPT 3042E (rubber component : extender oil = 100 : 120 (mass ratio)) made by Mitsui Chemicals Inc., are used.

As DCPD-based oil-extended EPDM using DCPD as diene, for example, Esprene 400 (rubber component : extender oil = 100 : 100 (mass ratio)) made by Sumitomo Chemical Co., Ltd., etc., are used.

As EPDM, one kind of the materials listed above may be used alone or two or more kinds may be used in combination.

When oil-extended EPDM is used as EPDM, the $M_{EPDM}$ in the equation (1) represents the parts by mass of the rubber component (EPDM) in the oil-extended EPDM.

As IR, various polymers having polyisoprene structures are usable.

As the IR, for example, Nipol (registered trademark) IR2200 and IR2200L made by ZEON CORPORATION, etc., are used.

As IR, one kind of the materials listed above may be used alone or two or more kinds may be used in combination.

As BR, various polymers having polybutadiene structures are usable.

As the BR, for example, JSR BR01, JSR T700, JSR BR51, JSR BR730 made by JSR Corporation, are used.

As BR, one kind of the materials listed above may be used alone or two or more kinds may be used in combination.

In the rubber composition, a cross-linking agent for cross-linking the rubber components is contained.

As the cross-linking agent, a normal sulfur-vulcanization (using a combination of sulfur or a sulfur-containing compound and a vulcanization accelerator and a vulcanization acceleration aid) cross-linking agent may be used, and more preferably, a peroxide cross-linking agent is preferably used.

Accordingly, as clearly shown by the results of Examples and Comparative examples described later, a paper feed roller which more sufficiently suppresses deterioration in the frictional coefficient when the paper feed roller is repeatedly brought into contact with paper and an accompanying conveyance failure, and can keep excellent paper feeding for a longer period, can be provided.

As the peroxide cross-linking agent, for example, one kind or two or more kinds of benzoyl peroxide, 1,1-bis (tert-butylperoxy)-3,3,5-trimethylcyclohexane, 2,5-dimethyl-2,5-di(benzoylperoxy)hexane, di(tert-butylperoxy)diisopropylbenzene, 1,4-bis[(tert-butyl)peroxyisopropyl]benzene, di(tert-butylperoxy)benzoate, tert-butyl peroxybenzoate, dicumylperoxide, tert-butylcumylperoxide, 2,5-dimethyl-2,5-di(tert-butylperoxy)hexane, ditert-butylperoxide, and 2,5-dimethyl-2,5-di(tert-butylperoxy)-3-hexene, are used.

In the rubber composition, a stiffener/filler such as carbon black is contained and optionally various additive agents such as a processing aid such as oil or a plasticizer may be properly selected and contained.

(Configuration example 2 of rubber composition)

The rubber composition to be used as a material of the paper feed roller of the present invention uses, as rubber components, three kinds of rubber components of EPDM, IR, and SBR in combination, and the mass ratio $R_1$ of the three kinds of rubber components expressed by the following equation (1)":

$$R_1 = M_{EPDM}/(M_{IR}+M_{SBR}) \quad (1)''$$

(in the equation, $M_{EPDM}$ represents the parts by mass of EPDM, $M_{IR}$ represents the parts by mass of IR, and $M_{SBR}$ represents the parts by mass of SBR)

is set to be not less than 25/75 and not more than 75/25.

Accordingly, a paper feed roller which hardly causes deterioration in the frictional coefficient due to paper powder accumulation when it is repeatedly brought into contact with paper and hardly causes an accompanying conveyance failure, and can keep excellent paper feeding for a longer period, can be provided.

In the present invention, the mass ratio $R_1$ of the three kinds of rubber components is limited to the above range for the following reason.

Specifically, when the mass ratio $R_1$ is less than the above range and EPDM is less, the weather resistance of the paper feed roller is deteriorated, and during long-term use, the paper feed roller is easily cracked and broken. The wear resistance is also deteriorated, so that when the paper feed roller is repeatedlybrought into contact with paper, the paper feed roller is easily worn, and the frictional coefficient is deteriorated by the wear and a paper conveyance failure easily occurs.

On the other hand, when the mass ratio $R_1$ is over the above range, IR and SBR are relatively less, so that the effect of the combined use of the three kinds of rubber components to make it hard to cause deterioration in the frictional coefficient due to paper powder accumulation caused by repeated contact of the paper feed roller with paper and an accompanying conveyance failure cannot be obtained.

The mass ratio $R_1$ of the three kinds of rubber components is preferably not less than 45/55 in the above range in order to prevent the problems described above from occurring and keep excellent paper feeding for a longer period.

The parts by mass of IR and SBR of the three kinds of rubber components preferably satisfy the following equation (2)":

$$M_{IR} > M_{SBR} \quad (2)''$$

(in the equation, $M_{IR}$ represents the parts by mass of IR, and $M_{SBR}$ represents the parts by mass of SBR). Accordingly, as clearly shown by the results of Examples and Comparative examples described later, a paper feed roller which more sufficiently suppresses deterioration in the frictional coefficient when the paper feed roller is repeatedly brought into contact with paper and an accompanying conveyance failure, and can keep excellent paper feeding for a longer period, can be provided.

The mass ratio $R_2$ of IR and SBR expressed by the following equation (3)":

$$R_2 = M_{IR} / M_{SBR} \quad (3)''$$

(in the equation, $M_{IR}$ represents the parts by mass of IR, and $M_{SBR}$ represents the parts by mass of SBR) is preferably not more than 3.0.

As EPDM of the three kinds of rubber components, various copolymers obtained by copolymerizing ethylene, propylene, and diene are usable. As diene, ethylidene norbornene (ENB), dicyclopentadiene (DCPD), etc., are used.

As EPDM, either so-called oil-extended EPDM extended with extender oil or non-oil-extended EPDM not extended with extender oil can be used. In order to improve workability when preparing a rubber composition by blending and kneading an additive agent such as a cross-linking agent to the three kinds of rubber components and molding the rubber composition into a roller shape, oil-extended EPDM is preferably used.

As ENB-based oil-extended EPDM using ENB as diene, for example, one or two or more kinds of Esprene (registered trademark) 670F (rubber component : extender oil = 100 : 100 (mass ratio)) and 671F (rubber component : extender oil = 100 : 70 (mass ratio)) made by Sumitomo Chemical Co., Ltd., and Mitsui EPT 3042E (rubber component : extender oil = 100 : 120 (mass ratio)) made by Mitsui Chemicals Inc., are used.

As DCPD-based oil-extended EPDM using DCPD as diene, for example, Esprene 400 (rubber component : extender oil = 100 : 100 (mass ratio)) made by Sumitomo Chemical Co., Ltd., etc., are used.

As EPDM, one kind of the materials listed above may be used alone or two or more kinds may be used in combination.

When oil-extended EPDM is used as EPDM, the $M_{EPDM}$ in the equation (1) represents the parts by mass of the rubber components (EPDM) in the oil-extended EPDM.

As IR, various polymers having polyisoprene structures are usable.

As the IR, for example, Nipol (registered trademark) IR2200 and IR2200Lmade by ZEON CORPORATION, etc. , are available.

As IR, one kind of the materials listed above may be used alone or two or more kinds may be used in combination.

As SBR, various copolymers obtained by copolymerizing styrene and butadiene according to emulsion polymerization, solution polymerization, etc., are usable. As SBR, either oil-extended SBR extended with extender oil or non-oil-extended SBR not extended with extender oil can be used.

As the oil-extended SBR obtained according to emulsion polymerization, for example, Nipol 1723 (rubber component : extender oil = 100 : 37.5 (mass ratio)), 1739 (rubber component : extender oil = 100 : 37.5 (mass ratio)), 9548 (rubber component : extender oil = 100 : 37.5 (mass ratio)) made by ZEON CORPORATION, etc., are used.

As the non-oil-extended SBR obtained according to emulsion polymerization, for example, Nipol 1500 and 1502 made by ZEON CORPORATION, etc., are used.

As the oil-extended SBR obtained according to solution polymerization, for example, Nipol NS460 (rubber component : extender oil = 100 : 37.5 (mass ratio)) and NS522 (rubber component : extender oil = 100 : 37.5 (mass ratio)) made by ZEON CORPORATION, etc., are used.

As the non-oil-extended SBR obtained by solution polymerization, Nipol NS116R, NS210, NS310S, and NS616 made by ZEON CORPORATION, etc., are used.

As SBR, one kind of the materials listed above may be used alone or two or more kinds may be used in combination.

When oil-extended SBR is used as SBR, the $M_{SBR}$ in the equations (1) to (3) represents the parts by mass of the rubber component (SBR) in the oil-extended SBR.

In the rubber composition, a cross-linking agent for cross-linking the rubber components is contained.

As the cross-linking agent, a normal sulfur-vulcanization (a combination of sulfur or a sulfur-containing compound and a vulcanization accelerator and a vulcanization acceleration aid) cross-linking agent may be used, and more preferably, a peroxide cross-linking agent is preferably used.

Accordingly, as clearly shown by the results of Examples and Comparative examples described later, a paper feed roller which more sufficiently suppresses deterioration in the frictional coefficient when the paper feed roller is repeatedly brought into contact with paper and an accompanying conveyance failure, and can keep excellent paper feeding for a longer period, can be provided.

As the peroxide cross-linking agent, for example, one kind or two or more kinds of benzoyl peroxide, 1,1-bis(tert-butylperoxy)-3,3,5-trimethylcyclohexane, 2,5-dimethyl-2,5-di(benzoylperoxy)hexane, di(tert-butylperoxy)diisopropylbenzene, 1,4-bis[(tert-butyl)peroxyisopropyl]benzene, di(tert-butylperoxy)benzoate, tert-butyl peroxybenzoate, dicumylperoxide, tert-butylcumylperoxide, 2,5-dimethyl-2,5-di(tert-butylperoxy)hexane, ditert-butylperoxide, and 2,5-dimethyl-2,5-di(tert-butylperoxy)-3-hexene, are used.

In the rubber composition, a stiffener/filler, namely carbon black is contained and optionally various additive agents such as a processing aid such as oil or a plasticizer may be properly selected and contained.

(Paper feed roller)

Fig. 1 is a perspective view showing an example of an embodiment of a paper feed roller 1 of the present invention.

Referring to Fig. 1, the paper feed roller 1 of this example includes a cylindrical roller main body 2 made of the above-described rubber composition, and a shaft 4 inserted in a central through hole 3 of the roller main body 2. The shaft 4 is made of, for example, a metal, ceramic, or hard resin.

The rubber thickness of the roller main body 2 is not especially limited, however, in order to realize excellent paper feeding in the case of a paper feed roller for, for example, static copying machines, the rubber thickness is preferably approximately not less than 1 mm and not more than 20 mm, more preferably, not less than 2 mm and not more than 15 mm.

The roller main body 2 is formed by molding the rubber composition described above into a cylindrical shape according to an arbitrary molding method such as injection molding and extrusion molding and then cross-linking the molded material by press cross-linking.

The roller main body 2 and the shaft 4 are integrated with each other by, for example, forming the outer diameter of the shaft 4 to be slightly larger than the inner diameter of the through hole 3 of the roller main body 2 and press-fitting the shaft 4 into the through hole 3, bonding the roller main body and the shaft by an adhesive agent, or vulcanization-bonding them by using a vulcanizing adhesive when the roller main body 2 is cross-linked.

At an arbitrary timing before or after the integration, the outer peripheral surface 5 of the roller main body 2 is grounded to a predetermined surface roughness as necessary, the outer peripheral surface 5 is subjected to knurling, texturing, or both ends of the roller main body 2 are cut so that the length in the axial direction of the roller main body 2, that is, the width of the paper feed roller 1 is set to a predetermined value. Accordingly, the paper feed roller 1 shown in Fig. 1 is manufactured.

The roller main body 2 may be formed into a double-layered structure including an outer layer on the outer peripheral surface 5 side and an inner layer on the shaft 4 side. In this case, at least the outer layer is made of the rubber composition described above.

Depending on use application of the paper feed roller 1, the through hole 3 may be provided at a position eccentric from the center of the roller main body 2. The roller main body 2 may have a deformed shape, for example, a shape formed by notching a part of the outer peripheral surface 5 flat instead of the cylindrical shape. In order to form the roller main body 2 having this deformed shape, the roller main body 2 is directly molded into the deformed shape by injection molding or extrusion molding, or the outer peripheral surface 5 of the roller main body 2 formed to have a cylindrical shape is post-processed to have the deformed shape.

Alternatively, the roller main body 2 may be deformed into the deformed shape by press-fitting the shaft 4 having a sectional shape deformed according to the deformed shape into the through hole 3 of the roller main body 2 formed to have a cylindrical shape. In this case, grinding, knurling, and texturing, of the outer peripheral surface 5 can be applied to the cylindrical roller main body 2 before being deformed, so that the workability is improved.

The paper feed roller 1 of the present invention can be used as various paper feed rollers of feed rollers, conveyance rollers, platen rollers, and ejection rollers, etc., to be installed in paper feed mechanisms in equipment such as static copying machines, laser beam printers, plain paper facsimile machines, ink-jet printers, and automatic teller machines (ATM).

[Examples]

Preparation of rubber compositions, manufacturing of paper feed rollers, and tests of Examples and Comparative examples described hereinafter were carried out in an environment at a temperature of 23±1 °C and a relative humidity of 55±1% except for special notes.

(Example 1)

60 parts by mass of oil-extended EPDM (Esprene 670F made by Sumitomo Chemical Co., Ltd. (rubber component : extender oil = 100 : 100 (mass ratio) described above) (30 parts by mass of EPDM as a rubber component), 50 parts by mass of IR (Nipol IR2200 made by ZEON CORPORATION described above), and 20 parts by mass of BR (JSR BR01 made by JSR Corporation described above) as rubber components, 3 parts by mass of dicumylperoxide (PERCUMYL (registered trademark) D made by NOF CORPORATION) as a peroxide cross-linking agent, 5 parts by mass of carbon black (HAF, trade name: SEAST 3 made by Tokai Carbon Co., Ltd.) as a stiffener/filler, and 20 parts by mass of paraffin oil (Diana (registered trademark) process oil PW-380 made by Idemitsu Kosan Co., Ltd.) were kneaded to prepare a rubber composition.

Then, the rubber composition was extrusion-molded into a cylindrical shape, and then press-vulcanized for 30 minutes at 160 °C to form a cylindrical material (cot) with an inner diameter of ϕ12.6, an outer diameter of ϕ25, and a length of 60 mm, and the cylindrical material was grounded to an outer diameter of ϕ24 by using a cylindrical grinder, and then cut into a length of 30 mm to form a cylindrical roller main body.

Then, the resin-made shaft (exclusive resin core) with a diameter of ϕ14 was press-fitted into the through hole of the roller main body to manufacture a paper feed roller.

In the rubber composition, the mass ratio $R_1$ expressed by the equation (1) was 30/70. The parts by mass of IR and BR satisfied the equation (2)', and the mass ratio $R_2$ expressed by the equation (3)' was 2.5.

(Example 2)

A rubber composition was prepared in the same manner as in Example 1 except that the amount of oil-extended EPDM was set to 100 parts by mass (EPDM as a rubber component was 50 parts by mass), the amount of IR was set to 30 parts by mass, the amount of BR was set to 20 parts by mass, and the amount of paraffin oil was set to 20 parts by mass, and a paper feed roller was manufactured.

In the rubber composition, the mass ratio $R_1$ expressed by the equation (1)' was 50/50. The parts by mass of IR and BR satisfied the equation (2)', and the mass ratio $R_2$ expressed by the equation (3)' was 1.5.

(Example 3)

A rubber composition was prepared in the same manner as in Example 1 except that the amount of the oil-extended EPDM was set to 100 parts by mass (EPDM as a rubber component was 50 parts by mass), the amount of IR was set to 20 parts by mass, the amount of BR was set to 30 parts by mass, and the amount of paraffin oil was set to 20 parts by mass, and a paper feed roller was manufactured.

In the rubber composition, the mass ratio $R_1$ expressed by the equation (1)' was 50/50. The parts by mass of IR and BR did not satisfy the equation (2)', and the mass ratio $R_2$ expressed by the equation (3)' was 0.67.

(Example 4)

A rubber composition was prepared in the same manner as in Example 1 except that the amount of the oil-extended EPDM was set to 140 parts by mass (EPDM as a rubber component was 70 parts by mass), the amount of IR was set to 20 parts by mass, the amount of BR was set to 10 parts by mass, and paraffin oil was not blended, and a paper feed roller was manufactured.

In the rubber composition, the mass ratio $R_1$ expressed by the equation (1)' was 70/30. The parts by mass of IR and BR satisfied the equation (2)', and the mass ratio $R_2$ expressed by the equation (3)' was 2.0.

(Example 5)

A rubber composition was prepared in the same manner as in Example 4 except that 1 part by mass of powdered sulfur (made by Tsurumi Chemical Industry), 2 parts by mass of tetraethylthiuram disulfide (vulcanization acceleration aid, Nocceller (registered trademark) TET made by OUCHI SHINKO CHEMICAL INDUSTRIAL CO., LTD.), 1 part by mass of di-2-benzothiazolyldisulfide (vulcanization acceleration aid, Nocceller DM made by OUCHI SHINKO CHEMICAL INDUSTRIAL CO., LTD.), 1 part by mass of stearic acid (trade name: Tsubaki made by NOF Corporation), and 5 parts by mass of zinc oxide II (made by MITSUI MINING & SMELTING CO., LTD.), were blended instead of the peroxide cross-linking agent, and a paper feed roller was manufactured.

In the rubber composition, the mass ratio $R_1$ expressed by the equation (1)' was 70/30. The parts by mass of IR and BR satisfied the equation (2)', and the mass ratio $R_2$ expressed by the equation (3)' was 2.0.

(Example 6)

60 parts by mass of oil-extended EPDM (Esprene 670F made by Sumitomo Chemical Co., Ltd. (rubber component : extender oil = 100 : 100 (mass ratio) described above) (30 parts by mass of EPDM as a rubber component), 50 parts by mass of IR (Nipol IR2200 made by ZEON CORPORATION described above), and 20 parts by mass of SBR (Nipol 1502 made by ZEON CORPORATION described above) as rubber components, 3 parts by mass of dicumylperoxide (PERCUMYL (registered trademark) D made by NOF CORPORATION as a peroxide cross-linking agent, 5 parts by mass of carbon black (HAF, trade name: SEAST 3 made by Tokai Carbon Co., Ltd.) as a stiffener/filler, and 20 parts by mass of paraffin oil (Diana (registered trademark) process oil PW-380 made by Idemitsu Kosan Co., Ltd.) were kneaded to prepare a rubber composition.

Then, the rubber composition was extrusion-molded into a cylindrical shape, and then press-vulcanized for 30 minutes at 160 °C to form a cylindrical material (cot) with an inner diameter of $\phi$12.6, an outer diameter of $\phi$25, and a length of 60 mm, and the cylindrical material was grounded to an outer diameter of $\phi$24 by using a cylindrical grinder, and then cut into a length of 30 mm to form a cylindrical roller main body.

Then, the resin-made shaft (exclusive resin core) with a diameter of $\phi$14 was press-fitted into the through hole of the roller main body to manufacture a paper feed roller.

In the rubber composition, the mass ratio $R_1$ expressed by the equation (1)" was 30/70. The parts by mass of IR and SBR satisfied the equation (2) ", and the mass ratio $R_2$ expressed by the equation (3)" was 2.5.

(Example 7)

A rubber composition was prepared in the same manner as in Example 6 except that the amount of oil-extended EPDM was set to 100 parts by mass (EPDM as a rubber component was 50 parts by mass), the amount of IR was set to 30 parts by mass, the amount of SBR was set to 20 parts by mass, and the amount of paraffin oil was set to 20 parts by mass, and a paper feed roller was manufactured.

In the rubber composition, the mass ratio $R_1$ expressed by the equation (1)" was 50/50. The parts by mass of IR and SBR satisfied the equation (2) ", and the mass ratio $R_2$ expressed by the equation (3)" was 1.5.

(Example 8)

A rubber composition was prepared in the same manner as in Example 6 except that the amount of the oil-extended EPDM was set to 100 parts by mass (EPDM as a rubber component was 50 parts by mass), the amount of IR was set to 20 parts by mass, the amount of SBR was set to 30 parts by mass, and the amount of paraffin oil was set to 20 parts by mass, and a paper feed roller was manufactured.

In the rubber composition, the mass ratio $R_1$ expressed by the equation (1)" was 50/50. The parts by mass of IR and SBR did not satisfy the equation (2)", and the mass ratio $R_2$ expressed by the equation (3)" was 0.67.

(Example 9)

A rubber composition was prepared in the same manner as in Example 6 except that the amount of the oil-extended EPDM was set to 140 parts by mass (EPDM as a rubber component was 70 parts by mass), the amount of IR was set to 20 parts by mass, the amount of SBR was set to 10 parts by mass, and paraffin oil was not blended, and a paper feed roller was manufactured.

In the rubber composition, the mass ratio $R_1$ expressed by the equation (1)" was 70/30. The parts by mass of IR and SBR satisfied the equation (2)", and the mass ratio $R_2$ expressed by the equation (3)" was 2.0.

(Example 10)

A rubber composition was prepared in the same manner as in Example 4 except that 1 part by mass of powdered sulfur (made by Tsurumi Chemical Industry), 2 parts by mass of tetraethylthiuram disulfide (vulcanization acceleration aid, Nocceller (registered trademark) TET made by OUCHI SHINKO CHEMICAL INDUSTRIAL CO., LTD.), 1 part by mass of di-2-benzothiazolyldisulfide (vulcanization acceleration aid, NoccellerDMmadebyOUCHI SHINKOCHEMICALINDUSTRIALCO., LTD.), 1 part by mass of stearic acid (trade name: Tsubaki made by NOF Corporation), and 5 parts by mass of zinc oxide II (made by MITSUI MINING & SMELTING CO., LTD.), were blended instead of the peroxide cross-linking agent, and a paper feed roller was manufactured.

In the rubber composition, the mass ratio $R_1$ expressed by the equation (1)" was 70/30. The parts by mass of IR and SBR satisfied the equation (2) ", and the mass ratio $R_2$ expressed by the equation (3)" was 2.0.

(Comparative example 1)

A rubber composition was prepared in the same manner as in Example 1 except that the amount of the oil-extended EPDM was set to 40 parts by mass (EPDM as a rubber component was 20 parts by mass), the amount of IR was set to 50 parts by mass, the amount of BR was set to 30 parts by mass, the amount of paraffin oil was set to 50 parts by mass, and carbon black was not blended, and a paper feed roller was manufactured.

In the rubber composition, the mass ratio $R_1$ expressed by the equation (1)'was 20/80. The parts by mass of IR and BR satisfied the equation (2)' , and the mass ratio $R_2$ expressed by the equation (3)' was 1.7.

(Comparative example 2)

A rubber composition was prepared in the same manner as in Example 1 except that the amount of the oil-extended EPDM was set to 160 parts by mass (EPDM as a rubber component was 80 parts by mass), the amount of IR was set to 10 parts by mass, the amount of BR was set to 10 parts by mass, and paraffin oil was not blended, and a paper feed roller was manufactured.

In the rubber composition, the mass ratio $R_1$ expressed by the equation (1)' was 80/20. The parts by mass of IR and BR did not satisfy the equation (2)', and the mass ratio $R_2$ expressed by the equation (3)' was 1.0.

(Comparative example 3)

200 parts by mass of the same oil-extended EPDM as the oil-extended EPDM used in Example 1 (EPDM as a rubber component was 100 parts by mass), 1 part by mass of powdered sulfur (made by Tsurumi Chemical Industry), 2 parts by mass of tetraethylthiuram disulfide (vulcanization acceleration aid, Nocceller TET made by OUCHI SHINKO CHEMICAL INDUSTRIAL CO., LTD.), 1 part by mass of di-2-benzothiazolyl disulfide (vulcanization acceleration aid, Nocceller DM made by OUCHI SHINKO CHEMICAL INDUSTRIAL CO., LTD.), 1 part by mass of stearic acid (trade name: Tsubaki made by NOF Corporation), 5 parts by mass of zinc oxide II (made by MITSUI MINING & SMELTING CO., LTD.), 1 part by mass of carbon black (HAF, trade name: SEAST 3 made by Tokai Carbon Co., Ltd.) as a stiffener/filler, 10 parts by mass of silicon oxide (Nipsil (registered trademark) VN3 made by TOSOH SILICA CORPORATION), 15 parts by mass of calcium carbonate (BF300 made by BIHOKU FUNKA KOGYO CO., LTD.) and titanium oxide (trade name: KRONOS KR-380 by Titan Kogyo, Ltd.), and 20 parts by mass of paraffin oil (Diana process oil PW-380 made by Idemitsu Kosan Co., Ltd.) were kneaded to prepare a rubber composition. Then, a paper feed roller was manufactured in the same manner as in Example 1 except that this rubber composition was used.

(Comparative example 4)

150 parts by mass of the same oil-extended EPDM as the oil-extended EPDM used in Example 1 (EPDM as a rubber component was 75 parts by mass), 25 parts by mass of non-oil-extended EPDM (Esprene 586 made by Sumitomo Chemical Co., Ltd.), 5 parts by mass of carbon black (HAF, trade name: SEAST 3 made by Tokai Carbon Co., Ltd.) as a stiffener/filler, and 1.5 parts by mass of dicumylperoxide (PERCUMYL D made by NOF CORPORATION) as a peroxide cross-linking agent were kneaded to prepare a rubber composition. Then, a paper feed roller was manufactured in the same manner as in Example 1 except that this rubber composition was used.

(Comparative example 5)

A rubber composition was prepared in the same manner as in Example 6 except that the amount of oil-extended EPDM was set to 40 parts by mass (EPDM as a rubber component was 20 parts by mass), the amount of IR was set to 50 parts by mass, the amount of SBR was set to 30 parts by mass, the amount of paraffin oil was set to 50 parts by mass, and carbon black was not blended, and a paper feed roller was manufactured.

In the rubber composition, the mass ratio $R_1$ expressed by the equation (1)" was 20/80. The parts by mass of IR and SBR satisfied the equation (2) ", and the mass ratio $R_2$ expressed by the equation (3)" was 1.7.

(Comparative example 6)

A rubber composition was prepared in the same manner as in Example 6 except that the amount of oil-extended EPDM was set to 160 parts by mass (EPDM as a rubber component was 80 parts by mass), the amount of IR was set to 10 parts by mass, the amount of SBR was set to 10 part by mass, and paraffin oil was not blended, and a paper feed roller was manufactured.

In the rubber composition, the mass ratio $R_1$ expressed by the equation (1)" was 80/20. The parts by mass of IR and SBR did not satisfy the equation (2)", and the mass ratio $R_2$ expressed by the equation (3)" was 1.0.

(Comparative example 7)

200 parts by mass of the same oil-extended EPDM as the oil-extended EPDM used in Example 6 (EPDM as a rubber component was 100 parts by mass), 1 part by mass of powdered sulfur (made by Tsurumi Chemical Industry), 2 parts by mass of tetraethylthiuram disulfide (vulcanization acceleration aid, Nocceller TET made by OUCHI SHINKO CHEMICAL INDUSTRIAL CO., LTD.), 1 part by mass of di-2-benzothiazolyl disulfide (vulcanization acceleration aid, Nocceller DM made by OUCHI SHINKO CHEMICAL INDUSTRIAL CO., LTD.), 1 part by mass of stearic acid (trade name: Tsubaki made by NOF Corporation), 5 parts by mass of zinc oxide II (made by MITSUI MINING & SMELTING CO., LTD.), 1 part by mass of carbon black (HAF, trade name: SEAST 3 made by Tokai Carbon Co., Ltd.) as a stiffener/filler, 10 parts by mass of silicon oxide (Nipsil (registered trademark) VN3 made by TOSOH SILICA CORPORATION), 15 parts by mass of calcium carbonate (BF300 made by BIHOKU FUNKA KOGYO CO., LTD.) and titanium oxide (trade name: KRONOS KR-380 by Titan Kogyo, Ltd.), and 20 parts by mass of paraffin oil (Diana process oil PW-380 made by Idemitsu Kosan Co., Ltd.) were kneaded to prepare a rubber composition. Then, a paper feed roller was manufactured in the same manner as in Example 6 except that this rubber composition was used.

(Comparative example 8)

150 parts by mass of the same oil-extended EPDM as the oil-extended EPDM used in Example 6 (EPDM as a rubber component was 75 parts by mass), 25 parts by mass of non-oil-extended EPDM (Esprene 586 made by Sumitomo Chemical Co., Ltd.), 5 parts by mass of carbon black (HAF, trade name: SEAST 3 made by Tokai Carbon Co., Ltd.) as a stiffener/filler, and 1.5 parts by mass of dicumylperoxide (PERCUMYL D made by NOF CORPORATION) as a peroxide cross-linking agent were kneaded to prepare a rubber composition. Then, a paper feed roller was manufactured in the same manner as in Example 6 except that this rubber composition was used.

(Frictional coefficient test and paper feeding status evaluation)

In a state where the paper feed rollers of the Examples and Comparative examples were pressed with a vertical load of 340gf onto a paper with a width of 60 mm and a length of 210 mm (Xerox Business 4200 made by Xerox Co, Ltd.) placed on a Teflon (registered trademark) plate, conveyance forces F applied to the paper when the paper feed rollers were rotated at a circumferential velocity of 105 mm/sec were measured by using a load cell, and the frictional coefficients $\mu$ were obtained according to the following equation (4):

$$\mu = F/340 \quad (4)$$

The measurement was performed immediately after the rollers were manufactured (initial stage), and after the paper feed rollers were installed as feed rollers in a laser printer HP Laser Jet 4350 made by Hewlett-Packard Japan, Ltd., and 10, 000 sheets of the same paper as described above (Xerox Business 4200 made by Xerox Co, Ltd.) were fed (after endurance).

The paper feeding statuses in this paper feeding were observed, and a paper feed roller which caused defective paper feeding during feeding of 10,000 sheets was evaluated as "C" (defective paper feeding status), and a paper feed roller which did not cause defective paper feeding even after feeding 10, 000 sheets was evaluated as "A" (excellent paper feeding status).

(Weather resistance test)

The weather resistances of the paper feed rollers of the Examples and Comparative examples were evaluated according to a static ozone degradability test regulated in Japanese Industrial Standards (JIS) K6259:2004 "Vulcanized rubber and Thermoplastic rubber - Determination of ozone resistance."

Test specimens sized and shaped as regulated by the standards were formed by using the same rubber compositions as those prepared in the Examples and Comparative examples, and it was confirmed whether the test specimens were cracked when they were exposed to ozone under conditions of a temperature of 40 °C, an ozone concentration of 50 ppm, and a test time of 96 hours while tensile strain (10% elongation) was applied to the test specimens.

Then, a test specimen which was not cracked was evaluated as "A" (excellent weather resistance), and a test specimen which was cracked was evaluated as "C" (defective weather resistance).

These results are shown in Table 1, Table 2, Table 3, and Table 4.

[Table 1]

| | | | Comparative example 1 | Example 1 | Example 2 | Example 3 | Example 4 |
|---|---|---|---|---|---|---|---|
| Parts by mass | Rubber component | Oil-extended EPDM | 40 (20) | 60 (30) | 100 (50) | 100 (50) | 140 (70) |
| | | Non-oil-extended EPDM | - | - | - | - | - |
| | | IR | 50 | 50 | 30 | 20 | 20 |
| | | BR | 30 | 20 | 20 | 30 | 10 |
| | | Mass ratio $R_1$ | 20/80 | 30/70 | 50/50 | 50/50 | 70/30 |
| | Stiffener/ filler | Carbon black | - | 5 | 5 | 5 | 5 |
| | | Other | - | - | - | - | - |
| | Paraffin oil | | 50 | 40 | 20 | 20 | - |
| | Cross-linking agent | Peroxide | 3 | 3 | 3 | 3 | 3 |
| | | Sulfur-vulcanization | - | - | - | - | - |
| Evaluation | Frictional coefficient | Initial stage | 2.4 | 2.3 | 2.2 | 2.2 | 2.2 |
| | | After endurance | 1.7 | 1.7 | 1.6 | 1.5 | 1.5 |
| | | Initial stage – after endurance | 0.7 | 0.6 | 0.6 | 0.7 | 0.7 |
| | Paper feeding status | | A | A | A | A | A |
| | Weather resistance | | C | A | A | A | A |

[Table 2]

| | | | Example 5 | Comparative example 2 | Comparative example 3 | Comparative example 4 |
|---|---|---|---|---|---|---|
| Parts by mass | Rubber component | Oil-extended EPDM | 140 (70) | 160 (80) | 200 (100) | 150 (75) |
| | | Non-oil-extended EPDM | - | - | - | 25 |
| | | IR | 20 | 10 | - | - |
| | | BR | 10 | 10 | - | - |
| | | Mass ratio $R_1$ | 70/30 | 20/80 | - | - |
| | Stiffener/ filler | Carbon black | 5 | 5 | 1 | 5 |
| | | Other | - | - | 55 | - |
| | Paraffin oil | | - | - | 20 | - |
| | Cross-linking agent | Peroxide | - | 3 | - | 1.5 |
| | | Sulfur-vulcanization | 10 | - | 10 | - |
| Evaluation | Frictional coefficient | Initial stage | 2.1 | 2.0 | 2.1 | 2.0 |
| | | After endurance | 1.4 | 1.2 | 1.2 | 1.2 |
| | | Initial stage – after endurance | 0.7 | 0.8 | 0.9 | 0.8 |
| | Paper feeding status | | A | C | C | C |
| | Weather resistance | | A | A | A | A |

[Table 3]

| | | | Comparative example 5 | Example 6 | Example 7 | Example 8 | Example 9 |
|---|---|---|---|---|---|---|---|
| Parts by mass | Rubber component | Oil-extended EPDM | 40 (20) | 60 (30) | 100 (50) | 100 (50) | 140 (70) |
| | | Non-oil-extended EPDM | – | – | – | – | – |
| | | IR | 50 | 50 | 30 | 20 | 20 |
| | | SBR | 30 | 20 | 20 | 30 | 10 |
| | | Mass ratio $R_1$ | 20/80 | 30/70 | 50/50 | 50/50 | 70/30 |
| | Stiffener/ filler | Carbon black | – | 5 | 5 | 5 | 5 |
| | | Other | – | – | – | – | – |
| | Paraffin oil | | 50 | 40 | 20 | 20 | – |
| | Cross-linking agent | Peroxide | 3 | 3 | 3 | 3 | 3 |
| | | Sulfur-vulcanization | – | – | – | – | – |
| Evaluation | Frictional coefficient | Initial stage | 2.5 | 2.4 | 2.3 | 2.3 | 2.2 |
| | | After endurance | 1.8 | 1.7 | 1.8 | 1.7 | 1.8 |
| | | Initial stage – after endurance | 0.7 | 0.7 | 0.5 | 0.6 | 0.4 |
| | Paper feeding status | | A | A | A | A | A |
| | Weather resistance | | C | A | A | A | A |

[Table 4]

| | | | Example 10 | Comparative example 6 | Comparative example 7 | Comparative example 8 |
|---|---|---|---|---|---|---|
| Parts by mass | Rubber component | Oil-extended EPDM | 140 (70) | 160 (80) | 200 (100) | 150 (75) |
| | | Non-oil-extended EPDM | – | – | – | 25 |
| | | IR | 20 | 10 | – | – |
| | | SBR | 10 | 10 | – | – |
| | | Mass ratio $R_1$ | 70/30 | 20/80 | – | – |
| | Stiffener/ filler | Carbon black | 5 | 5 | 1 | 5 |
| | | Other | – | – | 55 | – |
| | Paraffin oil | | – | – | 20 | – |
| | Cross-linking agent | Peroxide | – | 3 | – | 1.5 |
| | | Sulfur-vulcanization | 10 | – | 10 | – |
| Evaluation | Frictional coefficient | Initial stage | 2.1 | 2.1 | 2.1 | 2.0 |
| | | After endurance | 1.6 | 1.2 | 1.2 | 1.2 |
| | | Initial stage – after endurance | 0.5 | 0.9 | 0.9 | 0.8 |
| | Paper feeding status | | A | C | C | C |
| | Weather resistance | | A | A | A | A |

The results of Examples 1 to 10 and Comparative examples 1 to 8 shown in the Tables prove that, by using the three kinds of EPDM, IR, and either BR or SBR as rubber components and forming a paper feed roller by using a rubber composition obtained by blending the three kinds of rubber components so that the mass ratio $R_1$ expressed by the equation (1) becomes not less than 25/75 and not more than 75/25, deterioration in the frictional coefficient due to paper powder accumulation and an accompanying paper conveyance failure hardly occur, and weather resistance becomes excellent, so that a paper feed roller which can keep excellent paper feeding for a longer period can be provided.

The results of Examples 1 to 10 prove that the mass ratio $R_1$ is preferably not less than 45/55 in the above-described range, the parts by mass of IR and BR or SBR preferably satisfy the equation (2), and the rubber composition is preferably cross-linked by a peroxide cross-linking agent.

The present application corresponds to Japanese Patent Application No. 2009-273653 filed at the Japan Patent Office on December 1, 2009 and Japanese Patent Application No. 2009-273654 filed at the Japan Patent Office on December 1, 2009, the whole disclosure of which is incorporated herein by reference.

**Claims**

1. A paper feed roller made of a rubber composition, wherein the rubber composition contains carbon black, a cross-linking agent and, as rubber components, ethylene propylene diene rubber (EPDM), isoprene rubber (IR), and either butadiene rubber (BR) or styrene butadiene rubber (SBR), and the mass ratio $R_1$ of the three rubber components expressed by the equation (1):

$$R_1 = M_{EPDM}/(M_{IR} + M_x) \quad (1)$$

(in the equation, $M_{EPDM}$ represents the parts by mass of EPDM, $M_{IR}$ represents the parts by mass of IR, and $M_x$ represents the parts by mass of BR or SBR)
is not less than 25/75 and not more than 75/25.

2. The paper feed roller according to Claim 1, wherein the rubber composition contains isoprene rubber (IR) and butadiene rubber (BR) or styrene butadiene rubber (SBR) the parts by mass of which satisfy the following equation (2):

$$M_{IR} > M_x \quad (2)$$

(in the equation, $M_{IR}$ represents the parts by mass of IR, and $M_x$ represents the parts by mass of BR or SBR).

3. The paper feed roller according to Claim 1, wherein the butadiene rubber (BR) or styrene butadiene rubber (SBR) is butadiene rubber (BR), and the equations (1) and (2) are respectively expressed as:

$$R_1 = M_{EPDM}/(M_{IR}+M_{BR}) \quad (1)'$$

$$M_{IR} > M_{BR} \quad (2)'$$

($M_{BR}$ represents the parts by mass of BR).

4. The paper feed roller according to Claim 2, wherein the butadiene rubber (BR) or styrene butadiene rubber (SBR) is butadiene rubber (BR), and the equations (1) and (2) are respectively expressed as:

$$R_1 = M_{EPDM}/(M_{IR}+M_{BR}) \quad (1)'$$

$$M_{IR} > M_{BR} \quad (2)'$$

($M_{BR}$ represents the parts by mass of BR).

5. The paper feed roller according to Claim 1, wherein
the butadiene rubber (BR) or styrene butadiene rubber (SBR) is styrene butadiene rubber (SBR), and the equations (1) and (2) are respectively expressed as:

$$R_1 = M_{EPDM}/(M_{IR}+M_{SBR}) \quad (1)''$$

$$M_{IR} > M_{SBR} \quad (2)''$$

($M_{SBR}$ represents parts by mass of SBR).

6. The paper feed roller according to Claim 2, wherein

the butadiene rubber (BR) or styrene butadiene rubber (SBR) is styrene butadiene rubber (SBR), and the equations (1) and (2) are respectively expressed as:

$$R_1 = M_{EPDM}/(M_{IR}+M_{SBR}) \quad (1)''$$

$$M_{IR} > M_{SBR} \quad (2)''$$

($M_{SBR}$ represents parts by mass of SBR).

7. The paper feed roller according to Claim 1, wherein the rubber composition is cross-linked by a peroxide cross-linking agent.

8. The paper feed roller according to Claim 2, wherein the rubber composition is cross-linked by a peroxide cross-linking agent.

**Patentansprüche**

1. Papierzufuhrwalze hergestellt aus einer Kautschukzusammensetzung, wobei die Kautschukzusammensetzung Ruß, ein Vernetzungsmittel und, als Kautschukkomponente, Ethylen-Propylen-Dien-Kautschuk (EPDM), Isoprenkautschuk (IR) sowie entweder Butadienkautschuk (BR) oder Styrolbutadienkautschuk (SBR), enthält, und, wobei das Massenverhältnis $R_1$ der drei Kautschukkomponenten ausgedruckt durch die folgende Gleichung (1):

$$R_1 = M_{EPDM}/(M_{IR} + M_X) \quad (1),$$

(worin in der Gleichung $M_{EPDM}$ die Massenteile von EPDM bedeuten, $M_{IR}$ die Massenteile von IR bedeuten und Mx die Massenteile von BR oder SBR bedeuten),
nicht weniger als 25/75 und nicht mehr als 75/25 beträgt.

2. Papierzufuhrwalze nach Anspruch 1, wobei die Kautschukzusammensetzung Isoprenkautschuk (IR) und Butadienkautschuk (BR) oder Styrolbutadienkautschuk (SBR) enthält, wobei die Massenteile dieser die nachfolgende Gleichung (2) erfüllen:

$$M_{IR} > M_X \quad (2)$$

(worin der Gleichung $M_{IR}$ die Massenteile von IR bedeutet und Mx die Massenteile von BR oder SBR bedeutet).

3. Papierzufuhrwalze nach Anspruch 1, wobei der Butadienkautschuk (BR) oder Styrolbutadienkautschuk (SBR) ein Butadienkautschuk (BR) ist und die nachfolgenden Gleichungen (1) und (2) erfüllt werden:

$$R_1 = M_{EPDM}/(M_{IR}+M_{BR}) \quad (1)'$$

$$M_{IR} > M_{BR} \quad (2)'$$

($M_{BR}$ bedeutet die Massenteile von BR).

4. Papierzufuhrwalze nach Anspruch 2, wobei der Butadienkautschuk (BR) oder Styrolbutadienkautschuk (SBR) Butadienkautschuk (BR) ist und die nachfolgenden Gleichungen (1) und (2) erfüllt werden:

$$R_1 = M_{EPDM}/(M_{IR}+M_{BR}) \quad (1)'$$

$$M_{IR} > M_{BR} \quad (2)'$$

($M_{BR}$ bedeutet die Massenteile von BR).

5. Papierzufuhrwalze nach Anspruch 1, wobei der Butadienkautschuk (BR) oder Styrolbutadienkautschuk (SBR) Styrolbutadienkautschuk (SBR) ist und die nachfolgenden Gleichungen (1) und (2) erfüllt werden:

$$R_1 = M_{EPDM}/(M_{IR}+M_{SBR}) \quad (1)''$$

$$M_{IR} > M_{SBR} \quad (2)''$$

($M_{SBR}$ bedeutet die Massenteile von SBR).

6. Papierzufuhrwalze nach Anspruch 2, wobei der Butadienkautschuk (BR) oder Styrolbutadienkautschuk (SBR) Styrolbutadienkautschuk (SBR) ist und die nachfolgenden Gleichungen (1) und (2) erfüllt werden:

$$R_1 = M_{EPDM}/(M_{IR}+M_{SBR}) \quad (1)''$$

$$M_{IR} > M_{SBR} \quad (2)''$$

($M_{SBR}$ bedeutet die Massenteile von SBR).

7. Papierzufuhrwalze nach Anspruch 1, wobei die Kautschukzusammensetzung durch ein Peroxid-Vernetzungsmittel quervernetzt ist.

8. Papierzufuhrwalze nach Anspruch 2, wobei die Kautschukzusammensetzung durch ein Peroxid-Vernetzungsmittel quervernetzt ist.

**Revendications**

1. Cylindre d'entraînement du papier fait d'une composition de caoutchouc, où la composition de caoutchouc contient du noir de carbone, un agent réticulant et, comme composants de caoutchouc, du caoutchouc d'éthylène propylène diène (EPDM), du caoutchouc d'isoprène (IR) et du caoutchouc de butadiène (BR) ou du caoutchouc de styrène butadiène (SBR), et le rapport en masse $R_1$ des trois composants de caoutchouc exprimé par l'équation (1) :

$$R_1 = M_{EPDM}/(M_{IR} + M_x) \quad (1)$$

(dans l'équation, $M_{EPDM}$ représente les parties en masse de EPDM, $M_{IR}$ représente les parties en masse de IR et $M_x$ représente les parties en masse de BR ou SBR)
n'est pas inférieur à 25/75 et pas supérieur à 75/25.

2. Cylindre d'entraînement du papier selon la revendication 1, où la composition de caoutchouc contient du caoutchouc d'isoprène (IR) et du caoutchouc de butadiène (BR) ou du caoutchouc de styrène butadiène (SBR) dont les parties en masse satisfont l'équation (2) suivante :

$$M_{IR} > M_x \quad (2)$$

(dans l'équation, $M_{IR}$ représente les parties en masse de IR et $M_x$ représente les parties en masse de BR ou SBR).

3. Cylindre d'entraînement du papier selon la revendication 1, où le caoutchouc de butadiène (BR) ou le caoutchouc de styrène butadiène (SBR) est du caoutchouc de butadiène (BR), et les équations (1) et (2) sont exprimées respectivement par :

$$R_1 = M_{EPDM}/(M_{IR}+M_{BR}) \quad (1)'$$

$$M_{IR} > M_{BR} \quad (2)'$$

($M_{BR}$ représente les parties en masse de BR).

4. Cylindre d'entraînement du papier selon la revendication 2, où le caoutchouc de butadiène (BR) ou le caoutchouc de styrène butadiène (SBR) est du caoutchouc de butadiène (BR), et les équations (1) et (2) sont exprimées respectivement par :

$$R_1 = M_{EPDM}/(M_{IR}+M_{BR}) \quad (1)'$$

$$M_{IR} > M_{BR} \quad (2)'$$

$M_{BR}$ représente les parties en masse de BR).

5. Cylindre d'entraînement du papier selon la revendication 1, où le caoutchouc de butadiène (BR) ou le caoutchouc de styrène butadiène (SBR) est du caoutchouc de styrène butadiène (SBR), et les équations (1) et (2) sont exprimées respectivement par :

$$R_1 = M_{EPDM}/(M_{IR}+M_{SBR}) \quad (1)''$$

$$M_{IR} > M_{SBR} \quad (2)''$$

($M_{SBR}$ représente les parties en masse de SBR).

6. Cylindre d'entraînement du papier selon la revendication 2, où le caoutchouc de butadiène (BR) ou le caoutchouc de styrène butadiène (SBR) est du caoutchouc de styrène butadiène (SBR), et les équations (1) et (2) sont exprimées respectivement par :

$$R_1 = M_{EPDM}/(M_{IR}+M_{SBR}) \quad (1)''$$

$$M_{IR} > M_{SBR} \quad (2)''$$

$M_{SBR}$ représente les parties en masse de SBR).

7. Cylindre d'entraînement du papier selon la revendication 1, où la composition de caoutchouc est réticulée par un agent réticulant peroxyde.

8. Cylindre d'entraînement du papier selon la revendication 2, où la composition de caoutchouc est réticulée par un agent réticulant peroxyde.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007131806 A
- JP 2007131808 A
- JP 2007054178 A
- JP 3947809 B
- JP 2009273653 A
- JP 2009273654 A